# EUROPÄISCHE PATENTSCHRIFT

(11) **EP 2 069 202 B1**
(45) Veröffentlichungstag und Bekanntmachung des Hinweises auf die Patenterteilung: **03.03.2010**
(21) Anmeldenummer: 07723851.7
(22) Anmeldetag: 31.03.2007
(51) Int. Cl.: B64G 1/64

(54) **RAUMTRANSPORTER MIT EINER VORRICHTUNG ZUM ANDOCKEN AN EINEN SATELLITEN**
SPACE SHUTTLE HAVING A DEVICE FOR DOCKING WITH A SATELLITE
VÉHICULE SPATIAL MUNI D'UN DISPOSITIF POUR S'AMARRER À UN SATELLITE

(43) Veröffentlichungstag der Anmeldung: 17.06.2009
(73) Patentinhaber: Deutsches Zentrum für Luft- und Raumfahrt e.V., 51147 Köln (DE)
(72) Erfinder: BAUMANN, Andreas, 92521 Schwarzenfeld (DE); WILLBERG, Bertram, 82290 Landsberied (DE)
(74) Vertreter: von Kreisler Selting Werner
(86) Internationale Anmeldenummer: PCT/EP2007/002910
(87) Internationale Veröffentlichungsnummer: WO 2008/119362

(56) Entgegenhaltungen:
- EP-A- 1 190 948
- DE-A1- 19 848 427
- US-A- 4 177 964
- US-A- 5 005 786
- US-B1- 6 299 107

## Beschreibung

### Technisches Gebiet

Die Erfindung betrifft einen Raumtransporter mit einer Andock-Vorrichtung zum Andocken an einen Satelliten, insbesondere Kommunikations- oder Navigationssatelliten, welche Vorrichtung eine verschiebbare Zugstange mit einem an deren - bezogen auf den Raumtransporter - distalen Ende vorgesehenen Konus und einen von dem Raumtransporter aus betätigbaren Spreizmechanismus mit Spreizelementen aufweist, wobei an einem zur Zugstange konzentrischen Halteteil der Andock-Vorrichtung mindestens zwei Spreizelemente schwenkbar angeordnet sind.

Im geostationären Orbit in etwa 36000km Höhe befinden sich derzeit eine große Anzahl von Kommunikationssatelliten, deren Treibstoffvorräte für das Lageregelungssystem im allgemeinen nach zwölf bis fünfzehn Jahren Betrieb verbraucht sind. Bevor solche Satelliten gänzlich abgeschaltet werden, werden sie im allgemeinen auf einen höheren Orbit, den so genannten "Friedhofs-Orbit" befördert. Meistens funktionieren jedoch noch alle anderen Systeme, so dass einem weiteren Betrieb dieser Systeme nichts im Wege stehen würde.

Bei der inzwischen einsatzfähigen Ariane-5-Trägerrakete ist die Hauptnutzlast, meist in Form von einem oder zwei Satelliten auf einem konischen Adapter montiert, durch welchen eine Verbindung zwischen der Raketen-Oberstufe und dem/den Satelliten hergestellt ist. Der Raum im Inneren des Adapters ist bis jetzt ungenutzt. Inzwischen ist jedoch ein den Abmessungen des Adapters entsprechender Satellit entwickelt worden, der beispielsweise als "Raumtransporter" genutzt werden kann.

Der "Raumtransporter" dient bei einem Start der Ariane-5-Trägerrakte als Adapter, auf den die Hauptnutzlast montiert ist. Nach Aussetzen der Hauptnutzlast im Weltraum erfolgt schließlich die Abtrennung des Adapters von der Raketen-oberstufe und er fungiert als eigenständiger als Raumtransporter einsetzbarer Satellit. Ein derartiger Raumtransporter könnte beispielsweise an einen Kommunikationssatelliten angedockt werden, dessen Treibstoffvorräte zur Steuerung beispielsweise des Lageregelungssystems weitestgehend verbraucht sind.

### Stand der Technik

Eine erste Ausführungsform einer Andock-Vorrichtung (Capture Tool) ist von dem Anmelder Deutsches Zentrum für Luft- und Raumfahrt (DLR) bereits 1996 entwickelt worden; dieser Andock-Mechanismus ist seinerzeit im Labor-Testbetrieb eingesetzt worden.

Die Andock-Vorrichtung kann in die Düse eines in jedem Kommunikationssatelliten vorgesehenen Apogäum-Triebwerks eingeführt und an dem die engste Stelle der Düse darstellenden Düsenhals fixiert werden (siehe E. Settelmeyer et. al. Dornier Satellitensysteme GmbH und K. Landzettel, DLR "The experimental Servicing Satellite-ESS" (insbesondere Fig.7), ISTS-Conferenc 1998, Omiya, Japan).

Diese Andock-Vorrichtung weist eine von einem Motor über ein zwischengeschaltetes Getriebe angetriebene Zugstange mit einen konusförmigen Körper auf. Um die Zugstange ist konzentrisch ein Spreizmechanismus mit einer Anzahl sehr dünner stabförmiger Spreizelemente aus Federstahl vorgesehen.

Beim Einführen der Andock-Vorrichtung durch den Düsenhals der Düse des Apogäum-Triebwerks liegen die Spreizelemente aus Federstahl am Konus der Zugstange an. Durch Zurückziehen der Zugstange werden die Spreizelemente bis zu einem genau definierten Öffnungswinkel aufgespreizt und anschließend so weit zurückgezogen, bis die aufgespreizten sehr dünnen Spreizelemente satt an der Innenwandung des Düsenhalses anliegen.

Die Spreizelemente aus Federstahl, die einen Durchmesser in der Größenordnung von 2mm haben, sind somit ausgesprochen dünn und mit einer Oxydschicht überzogen. Da die dünnen Spreizelemente satt an dem Düsenhals anliegen, wird deren Oxydschicht, insbesondere vor allem durch unvermeidbare Vibrationen des Satelliten, an welchem der Raumtransporter angedockt hat, so stark beschädigt, dass bei einem längeren satten Anliegen auf Grund der hohen Flächenpressung die dünnen Spreizelemente aus Federstahl mit dem Düsenhals kalt verschweißt werden und somit die Andock-Vorrichtung unlösbar mit dem Kommunikationssatelliten verbunden ist.

In DE 198 48 427 A1, welche den nächstliegenden Stand der Technik darstellt und den Oberbegriff des Anspruchs 1 offenbart, ist ein Raumtransporter mit einer Andock-Vorrichtung zum Andocken an einen Satelliten beschrieben, wobei die Andock-Vorrichtung eine verschiebbare Zugstange mit einem an ihrem distalen Ende vorgesehenen Konus und einem von dem Raumtransporter aus betätigbaren Spreizmechanismus mit Spreizelementen aufweist. Hierbei sind an einem zur Zugstange konzentrischen Halteteil der Andock-Vorrichtung mindestens zwei Spreizelemente schwenkbar angeordnet. Die Krümmung der Außenflächen jedes der Spreizelemente entspricht im Bereich ihrer nach außen weisenden distalen Enden der Krümmung des Düsenhalses der Düse des Satelliten-Triebwerks. Aus US 6 299 107 B1 ist bekannt, dass Spreizelemente als Hebelspreizer ausgebildet sein können.

### Beschreibung der Erfindung

Aufgabe der Erfindung ist es, die Spreizelemente einer Andock-Vorrichtung so auszubilden, dass die Flächenpressung zwischen den Spreizelementen und dem Düsenhals so klein wie möglich ist und ein Kaltverschweißen zwischen Spreizelementen und der Innenseite des Düsenhalses mit sehr hoher Wahrscheinlichkeit ausgeschlossen werden kann.

Gemäß der Erfindung ist diese Aufgabe bei einem Raumtransporter mit einer Andock-Vorrichtung zum Andocken an einen Satelliten, insbesondere Kommunikations- oder Navigationssatelliten nach dem Oberbegriff des Patentanspruchs durch die Merkmale in dessen kennzeichnenden Teil gelöst.

Bei der erfindungsgemäßen Andock-Vorrichtung weisen die Spreizelemente in Form von Hebelspreizern an ihren - bezogen auf den Raumtransporter - proximalen Enden nach innen zur Zugstange vorstehende Nasen auf. Im mittleren Bereich der Zugstange ist ein Einstich ausgebildet, in welchem beim Zurückziehen der mittels des Konus der Zugstange bis zu einem definierten Öffnungswinkel aufgespreizten Hebelspreizer deren nach innen vorstehende Nasen einrasten.

Somit ist durch Vorsehen der schwenkbaren Hebelspreizer nicht nur eine formschlüssige Verbindung zwischen den Hebelspreizern und dem Düsenhals geschaffen, sondern auch die Flächenpressung zwischen den Hebelspreizern und der Düsenhals-Innenwandung gegenüber der bekannten Andock-Vorrichtung in einem solchen Maße reduziert, dass mit sehr hoher Wahrscheinlichkeit davon auszugehen ist, dass ein Kaltverschweißen zwischen den Helbelspreizern und dem Düsenhals nicht zu befürchten ist.

### Beschreibung der Zeichnungen

Es zeigen:
- Fig.1: eine schematische Darstellung einer Andock-Vor- richtung mit anliegenden Hebelspreizern;
- Fig.2: eine schematische Darstellung mit bis zu einem defi- nierten Öffnungswinkel aufgespreizten Hebelsprei- zern;
- Fig.3: eine der Fig.1 entsprechende Darstellung der Andock- Vorrichtung nach dem Einführen durch einen Düsen- hals;
- Fig.4: eine der Fig.2 entsprechende Darstellung der Andock- vorrichtung mit bis zum vorgegebenen Öffnungswinkel aufgespreizten Hebelspreizern, und
- Fig.5: eine schematische Darstellung mit am Düsenhals form- schlüssig anliegenden Hebelspreizern.

### Beschreibung der Erfindung

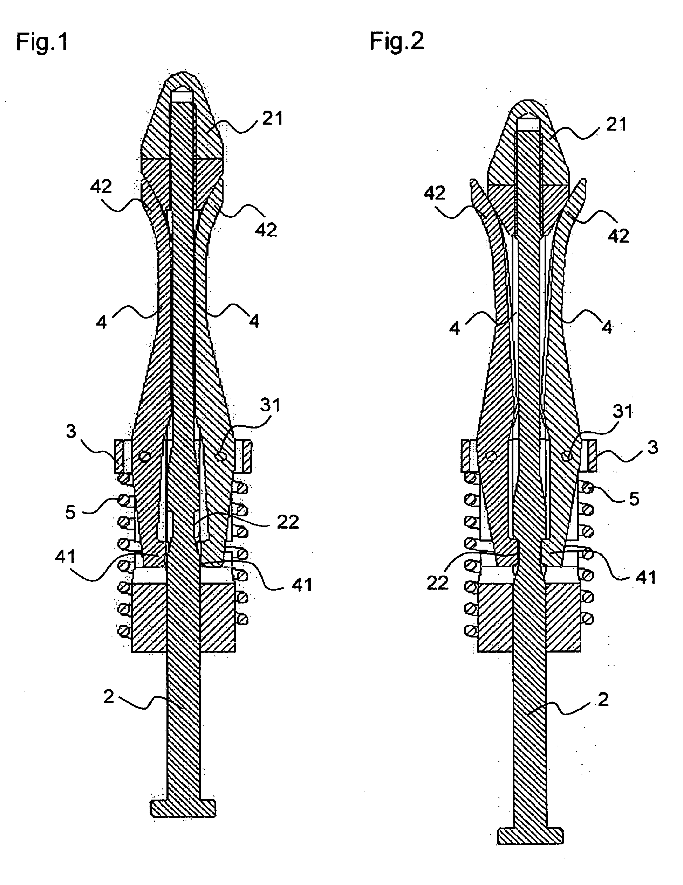

In Fig.1 sind in einer schematischen unmaßstäblichen Schnittansicht die wesentlichen Teile einer Andock-Vorrichtung wiedergegeben, nämlich eine durchgehende Zugstange 2 an deren in Fig.1 oberen Ende ein Konus 21 vorgesehen ist und in welcher im mittleren unteren Bereich ein Einstich 22 ausgebildet ist; ein zu der Zugstange 2 konzentrisches Halteteil 3, unter dem eine zylinderförmige Druckfeder 5 angeordnet ist und in dem als Drehachsen dienende Haltestifte 31 eingesetzt sind, um welche mindestens zwei, vorzugsweise vier oder mehr gleichmäßig verteilte Hebelspreizer 4 schwenkbar gehaltert sind; an den in Fig.1 unteren Enden der Hebelspreizer 4 sind nach innen zur Zugstange 2 vorstehende Nasen 41 ausgebildet.

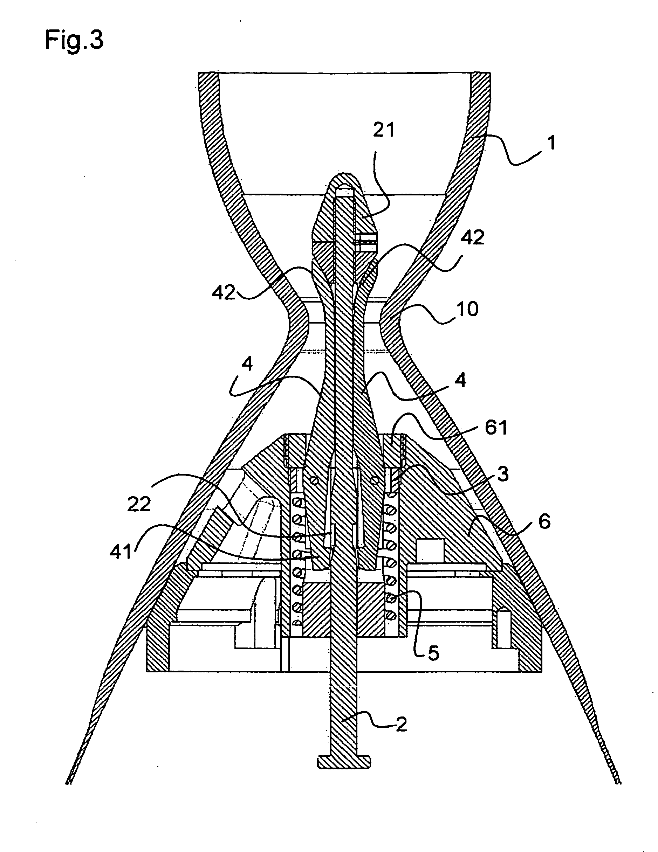

Die Außenflächen der Hebelspreizer 4 weisen an den nach außen weisenden Enden 42 jeweils eine Krümmung auf, welche der Krümmung des Düsenhalses 10 (Fig.3 bis 5) eines Satelliten-Triebwerks, üblicherweise eines Apogäumtriebwerks entspricht. Ferner sind die schwenkbaren Hebelspreizer 4 im Bereich (in Fig.1) oberhalb der Haltestifte 31 und den Enden 42 so ausgebildet, dass sie, wie in Fig.1 wiedergegeben, etwa parallel zu der Zugstange 2 verlaufen.

Der Unterschied zwischen den schematischen Darstellungen der Fig.1 und 2 besteht darin, dass im Unterschied zu Fig.1 in Fig.2 die Hebelspreizer 4 durch ein Zurückziehen des an der Zugstange 2 vorgesehenen Konus 21 bis zu einem definierten Öffnungswinkel aufgespreizt sind. Hierbei ist die Zugstange 2 soweit zurückgezogen, dass die an den unteren Enden der Hebelspreizer 4 ausgebildeten Nasen 21 hinter dem in der Zugstange 2 ausgebildeten Einstich 22 eingerastet sind.

In Fig.3 ist die anhand von Fig.1 beschriebene Andock-Vorrichtung in eine Düse 1 eines nicht näher dargestellten Apogäum-Triebwerks so weit eingeführt, dass sich der am in Fig.3 oberen Ende der Zugstange 2 vorgesehene Konus 21 oberhalb des die engste Stelle der Düse 1 darstellenden Düsenhalses 10 befindet. In der sich im unteren Teil der Fig.3 erweiternden Expansionsdüse ist eine Art an die Expansionsdüse angepasster Adapter 6 vorgesehen, an dessen in Fig.3 oberen Querteil 61 das Halteteil 3 der Andock-Vorrichtung anliegt.

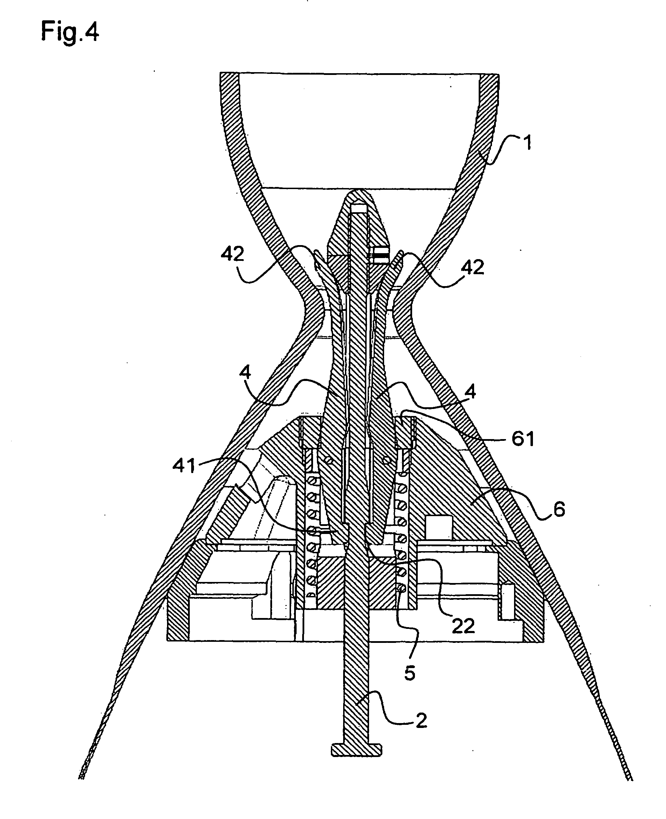

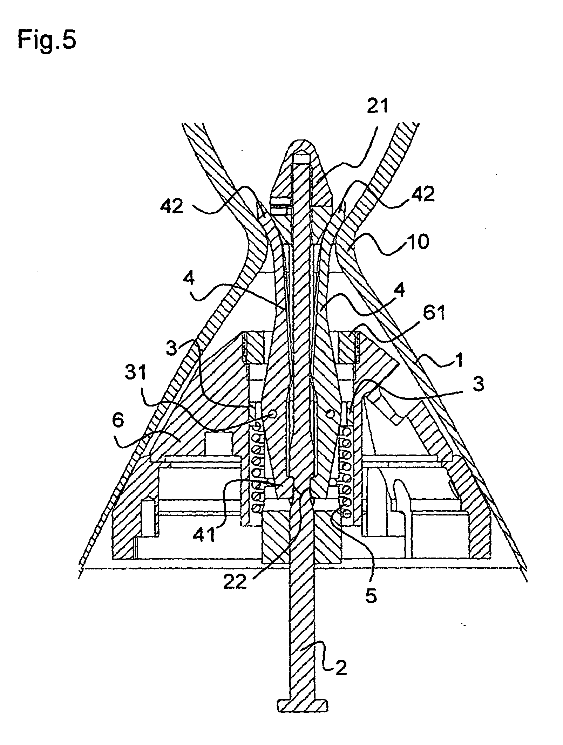

Der Unterschied zwischen den schematischen Darstellungen von Fig.3 und Fig.4 besteht darin, dass in Fig.4 die Zugstange soweit in Richtung des nicht dargestellten Raumtransporters zurückgezogen ist, dass, bezogen auf Fig.4, die am unteren Ende der Hebelspreizer 4 ausgebildeten Nasen 41 in den Einstich 22 der Zugstange 2 eingerastet sind. Durch das Einrasten sind die Hebelspreizer soweit gespreizt, dass zwischen ihnen der vorgegebene definierte Öffnungswinkel erreicht ist.
Wie der schematischen Darstellung in Fig.5 zu entnehmen ist, wird bei einem weiteren Zurückziehen der Zugstange, beispielsweise mittels eines Motors und eines dem Motor nachgeordneten Getriebes, wie beispielsweise bei der eingangs beschriebenen bekannten Ausführungsform, die Druckfeder 5 zusammengedrückt; gleichzeitig werden die in dem Einstich 22 eingerasteten Hebelspreizer 4 soweit zurückgezogen, dass die definiert aufgespreizten Enden 42 der Hebelspreizer 4 formschlüssig an der Innenwandung des Düsenhalses 10 anliegen. Durch die unter dem Halteteil 3 angeordnete schraubenförmige Druckfeder 5 werden die Hebelspreizer 4 sicherer und schneller aufgespreizt.

Da, wie vorstehend ausgeführt, die Außenflächen der Hebelspreizer 4 an deren oberen Enden 42 eine Krümmung aufweisen, welche der Krümmung des Düsenhalses 10 entspreched angepasst ist, ist die Flächenpressung zwischen den Enden 42 der Hebelspreizer 4 und dem Düsenhals 10 sehr viel geringer als bei den bekannten Ausführungsformen.

Aufgrund der, wie vorstehend ausgeführt, wesentlich geringeren Flächenpressung zwischen den Hebelspreizern 4 und dem Düsenhals 10 ist die Wahrscheinlichkeit sehr groß, dass es zu keinem Kaltverschweißen zwischen den oberen Enden 42 der Hebelspreizer 4 und der Innenwandung im Bereich des Düsenhalses 10 kommt.

### Bezugszeichenliste

- 1: Düse eines Apogäum-Triebwerks
- 10: Engstelle von 1
- 2: Zugstange
- 21: Konus an 2
- 22: Einstich in 2
- 3: Halteteil
- 31: Haltestifte
- 4: Hebelspreizer
- 41: Nase an 4
- 42: Enden von 4
- 5: Druckfeder

- 6: Adapter
- 61: Querteil von 6

## Patentansprüche

1. Raumtransporter mit einer Andock-Vorrichtung zum Andocken an einen Satelliten, insbesondere Kommunikations- oder Navigationssatelliten, welche Vorrichtung eine verschiebbare Zugstange (2) mit einem an deren - bezogen auf den Raumtransporter - distalen Ende vorgesehenen Konus (21) und einen von dem Raumtransporter aus betätigbaren Spreizmechanismus mit Spreizelementen aufweist, wobei an einem zur Zugstange (2) konzentrischen Halteteil (3) der Andock-Vorrichtung mindestens zwei Spreizelemente schwenkbar angeordnet sind, **dadurch gekennzeichnet, dass** die Spreizelemente in Form von Hebelspreizern (4) an ihren - bezogen auf den Raumtransporter - proximalen Enden nach innen zur Zugstange (2) vorstehende Nasen (41) aufweisen, und dass im mittleren Bereich der Zugstange (2) ein Einstich (22) ausgebildet ist, in welchen beim Zurückziehen der bis zu einem definierten Öffnungswinkel aufgespreizten Hebelspreizer (3) deren nach innen vorstehende Nasen (41) einrasten.

2. Raumtransporter nach Anspruch 1, **dadurch gekennzeichnet, dass** die schwenkbaren Hebelspreizer (4) im Bereich nahe deren Drehpunkte und deren nach außen gebogenen Enden (42) so ausgebildet sind, dass sie etwa parallel zu der Zugstange (2) verlaufen.

## Claims

1. A space shuttle with a docking device for docking to a satellite, especially a communication or navigation satellite, the device comprising a displaceable linkage (2) having a cone (21) at its distal end - relative to the shuttle - and a spreader mechanism with spreading elements, operable from the shuttle, at least two spreading elements being pivotally provided at a retaining part (3) of the docking device that is concentric to the linkage (2), **characterized in that** the spreading elements configured as lever spreaders (4) have noses (41) at their proximal ends, relative to the space shuttle, the noses projecting inward toward the linkage (2), and that the central portion of the linkage (2) is formed with a recess (22) into which the inward projecting noses (41) of the lever spreaders (4) engage when the lever spreaders, spread to a defined opening angle, are withdrawn.

2. The space shuttle of claim 1, **characterized in that** the pivotable lever spreaders (4) are configured near their pivot points and their outward bent ends (42) such that they extend approximately in parallel with the linkage (2).

## Revendications

1. Véhicule spatial avec un dispositif pour s'amarrer à un satellite, particulièrement un satellite de communication ou un satellite de navigation, ledit dispositif comprenant une barre de traction (2) avec un cône (21) à sa extrémité distale - par rapport au véhicule spatial - et un mécanisme écarteur avec des éléments écarteurs, actionnable depuis le véhicule spatial, au moins deux éléments écarteurs étant disposés de manière pivotable à une partie de retenue (3) du dispositif d'amarrage concentrique avec ladite barre de traction (2), **caractérisé en ce que** les éléments écarteurs, réalisés en forme de leviers écarteurs (4), présentent sur leurs extrémités proximales - par rapport au véhicule spatial - des nez (41) en saillie à l'intérieur vers la barre de traction (2), et que la partie centrale de ladite barre de traction (2) présente une encoche (22) dans laquelle les nez (41) en saillie vers l'intérieur s'enclenchent lorsque les leviers écarteurs (4), écartés à un angle d'ouverture défini, sont retirés.

2. Véhicule spatial selon la revendication 1, **caractérisé en ce que,** près de leurs centres de rotation et de leurs extrémités courbées vers l'extérieur (42), les leviers écarteurs (4) pivotables sont configurés de sorte qu'ils sont approximativement parallèle à ladite barre de traction (2).
